# EUROPEAN PATENT SPECIFICATION

(11) **EP 3 658 495 B1**
(45) Date of publication and mention of the grant of the patent: **30.08.2023**
(21) Application number: 18743787.6
(22) Date of filing: 20.07.2018
(51) Int. Cl.: C01B 3/38, C01B 13/02, C25B 1/04

(54) **METHOD FOR THE PREPARATION OF SYNTHESIS GAS**
VERFAHREN ZUR HERSTELLUNG VON SYNTHESEGAS
PROCÉDÉ DE PRÉPARATION D'UN GAZ DE SYNTHÈSE

(30) Priority: 25.07.2017 DK PA201700425; 25.09.2017 DK PA201700522; 28.05.2018 DK PA201800237; 06.07.2018 DK PA201800352
(43) Date of publication of application: 03.06.2020
(73) Proprietor: Topsoe A/S, 2800 Kgs. Lyngby (DK)
(72) Inventor: AASBERG-PETERSEN, Kim, 3450 Allerød (DK); HAN, Pat A., 2765 Smørum (DK); HULTQVIST, Michael, 2880 Bagsværd (DK); MORTENSEN, Peter Molgaard, 4000 Roskilde (DK)
(74) Representative: Topsoe A/S
(86) International application number: PCT/EP2018/069781
(87) International publication number: WO 2019/020515

(56) References cited:
- US-A1- 2003 065 042
- US-A1- 2009 165 459
- US-A1- 2013 345 325
- US-A1- 2014 323 597
- US-A1- 2017 002 281

## Description

The present application is directed to the preparation of synthesis gas. More particular, the invention combines electrolysis of water, tubular steam reforming and autothermal reforming and optionally additionally heat exchange reforming of a hydrocarbon feed stock in the preparation of a hydrogen and carbon oxides containing synthesis gas. Production of synthesis gas e.g. for the methanol synthesis with natural gas feed is typically carried out by steam reforming.

The principal reaction of steam reforming is (given for methane) :

CH₄ + H₂O ⇆ 3H₂ + CO

Similar reactions occur for other hydrocarbons. Steam reforming is normally accompanied by the water gas shift reaction:

CO + H₂O ⇆ CO₂ + H2

Tubular reforming can e.g be done by, a combination of a tubular reformer (also called steam methane reformer, SMR) and autothermal reforming (ATR), also known as primary and secondary reforming or 2-step reforming. Alternatively, stand-alone SMR or stand-alone ATR can be used to prepare the synthesis gas.

The main elements of an ATR reactor are a burner, a combustion chamber, and a catalyst bed contained within a refractory lined pressure shell. In an ATR reactor, partial oxidation or combustion of a hydrocarbon feed by sub-stoichiometric amounts of oxygen is followed by steam reforming of the partially combusted hydrocarbon feed stream in a fixed bed of steam reforming catalyst. Steam reforming also takes place to some extent in the combustion chamber due to the high temperature. The steam reforming reaction is accompanied by the water gas shift reaction. Typically, the gas is at or close to equilibrium at the outlet of the ATR reactor with respect to steam reforming and water gas shift reactions. The temperature of the exit gas is typically in the range between 850 and 1100°C. More details of ATR and a full description can be found in the art such as "Studies in Surface Science and Catalysis, Vol. 152,"Synthesis gas production for FT synthesis"; Chapter 4, p.258-352, 2004".

More details of tubular steam reforming and 2-step reforming can be found in the same reference.

Regardless of whether stand-alone SMR, 2-step reforming, or stand-alone ATR is used, the product gas will comprise hydrogen, carbon monoxide, and carbon dioxide as well as other components normally including methane and steam.

Methanol synthesis gas has preferably a composition corresponding to a so-called module (M=(H2-CO2)/(CO+CO2)) of 1.90-2.20 or more preferably slightly above 2 (eg.2.00-2.10) .

Steam reforming in an SMR typically results in a higher module i.e. excess of hydrogen, while 2-step reforming can provide the desired module. In 2-step reforming the exit temperature of the steam reformer is typically adjusted such that the desired module is obtained at the outlet of the ATR.

In 2-step reforming the steam methane reformer (SMR) must be large and a significant amount of heat is required to drive the endothermic steam reforming reaction. Hence, it is desirable if the size and duty of the steam reformer can be reduced. Furthermore, the ATR in the 2-step reforming concept requires oxygen. Today this is typically produced in a cryogenic air separation unit (ASU). The size and cost of this ASU is large. If the oxygen could be produced by other means, this would be desirable.

US 2013/345325 a method for producing methanol or hydrocarbons is provided. The production method comprises producing a synthesis gas from carbonaceous material, according to a method comprising at least one reforming step, the synthesis gas having a first hydrogen/carbon monoxide molar ratio under the first operating conditions for the reforming operation; producing a stream of hydrogen from a hydrogenated raw material and from a first consumed electric power, the hydrogen stream having a first molar flow rate for said first consumed electric power; and lowering the consumed electric power for producing the hydrogen stream, down to a second electric power below the first electric power and transitioning to second operating conditions different from the first for the reforming operation in order to compensate for the lowering of the molar flow rate of the hydrogen flow, the synthesis gas having a second hydrogen/carbon monoxide molar ratio greater than the first under the second operating conditions.

We have found that when combining tubular steam reforming, autothermal reforming and together with electrolysis of water and/or steam, the expensive ASU can be reduced and even become superfluous in the preparation of synthesis gas.

Thus, this invention provides a method for the preparation of synthesis gas comprising the steps of
(a) providing a hydrocarbon feed stock;
(b) preparing a separate hydrogen containing stream and a separate oxygen containing stream by electrolysis of water and/or steam;
(c) tubular steam reforming at least a part of the hydrocarbon feed stock from step (a)to a tubular steam reformed gas;
(d)autothermal reforming in an autothermal reformer the tubular steam reformed gas with at least a part of the oxygen containing stream obtained by the electrolysis of water and/or steam in step (b) to an autothermal reformed gas stream comprising hydrogen, carbon monoxide and carbon dioxide;
(e) introducing at least part of the separate hydrogen containing stream from step (b) into the autothermal reformed gas stream from step (d); and
(f) withdrawing the synthesis gas, wherein the electrolysis is operated such that all the hydrogen produced by the electrolysis is added to the reformed gas downstream step (d) to provide a module M= (H₂-CO₂) / (CO+CO₂) in the synthesis gas withdrawn from step (f) of between 1.9 and 2.2, preferably between 2 and 2.1.

In some applications, the oxygen prepared by electrolysis of water introduced into the autothermal reformer in step (d) can additionally be supplemented by oxygen prepared by air separation in an (ASU).

Thus in an embodiment of the invention, the method according to the invention comprises the further step of separating air into a separate stream containing oxygen and into a separate stream containing nitrogen and introducing at least a part of the separate stream containing oxygen into the autothermal reformer in step (d).

Like the electrolysis of water and/or steam, the air separation can preferably at least be powered by renewable energy.

In all the above embodiments, a part of the hydrocarbon feed stock from step (a) can bypass the tubular steam reforming in step (c) and introduced to the autothermal reformer in step (d)

The module can additionally be adjusted to the desired value by introducing substantially pure carbon dioxide upstream step (c), and/or upstream of step (d) and/or downstream step d.

In general, suitable hydrocarbon feed stocks to the tubular reformer and/or the heat exchange reformer(s) for use in the invention comprise natural gas, methane, LNG, naphtha or mixtures thereof either as such or pre-reformed and/or desulfurized.

The hydrocarbon feed stocks may further comprise hydrogen and/or steam as well as other components.

The electrolysis can be performed by various means known in the art such as by solid oxide based electrolysis or electrolysis by alkaline cells or polymer cells (PEM).

If the power for the electrolysis is produced (at least in part) by sustainable sources, the CO2-emissions is per unit of product produced by the method reduced.

The method according to the invention is preferably employed for the production methanol by conversion of the synthesis gas withdrawn in step (f)

However, the method according to the invention can also be employed for producing synthesis gas for other applications where it is desirable to increase the hydrogen concentration in the feed gas and where part of the oxygen and hydrogen needed for synthesis gas production is favorably produced by electrolysis.

### Example

In the below table a comparison between conventional 2-step reforming and 2-step reforming + electrolysis according to the invention is provided.

**Comparison Table**

| | 2-step reforming | 2-step reforming + electrolysis |
|---|---|---|
| Tubular reformer inlet T [°C] | 625 | 625 |
| Tubular reformer outlet T [°C] | 706 | 669 |
| Tubular reformer inlet P [kg/cm² g] | 31 | 31 |
| Tubular reformer min. Required fired duty [Gcal/h] | 13,38 | 9,48 |
| Tubular reformer outlet flow [Nm³/h] | 67180 | 64770 |

| **Feed to SMR** | | |
|---|---|---|
| H2 [Nm³/h] | 4099 | 4091 |
| CO2 [Nm³/h] | 897 | 895 |
| CH4 [Nm³/h] | 22032 | 21993 |
| CO [Nm³/h] | 14 | 14 |
| H2O [Nm³/h] | 30313 | 30259 |
| N2 [Nm³/h] | 0 | 0 |
| ATR feed inlet T [°C] | 708 | 669 |
| ATR oxidant inlet T [°C] | 240 | 240 |
| ATR outlet T [°C] | 1050 | 1050 |
| ATR inlet P [kg/cm² g] | 29 | 29 |
| ATR outlet flow [Nm³/h] | 101004 | 100937 |

| **Feed to ATR** | | |
|---|---|---|
| H2 [Nm³/h] | 21538 | 17792 |
| CO2 [Nm³/h] | 3598 | 3320 |
| CH4 [Nm³/h] | 17119 | 18235 |
| CO [Nm³/h] | 2226 | 1348 |
| H2O [Nm³/h] | 22698 | 24075 |
| **Oxidant to ATR** | | |
| H2O [Nm³/h] | 100 | 108 |
| N2 [Nm³/h] | 212 | 228 |
| O2 [Nm³/h] | 10393 | 11148 |

| **Electrolysis product** | | |
|---|---|---|
| H2 [Nm³/h]* | 0 | 1493 |
| O2 [Nm³/h]** | 0 | 747 |

| **Oxygen from ASU** | | |
|---|---|---|
| O2 [Nm³/h] | 10393 | 10401 |

| **Product gas** | | |
|---|---|---|
| H2 [Nm³/h] | 52099 | 52358 |
| CO2 [Nm³/h] | 4679 | 4942 |
| CH4 [Nm³/h] | 364 | 319 |
| CO [Nm³/h] | 17901 | 17642 |
| H2O [Nm³/h]* | 25750 | 26941 |
| N2 [Nm³/h]* | 212 | 2289 |
| **Module** | 2.10 | 2.10 |

| | | |
|---|---|---|
| * Included in product gas ** Included in oxidant to ATR | | |

As apparent from the Comparison Table above, the required duty for the tubular reformer can be significantly reduced by the current invention. This duty will in practice translate in to less use of natural gas for heating the SMR. Besides the lower consumption figures of natural gas, this results with an added benefit of less CO₂ emissions in the flue gas stack. Furthermore, the investment of the tubular reformer is substantially reduced.

## Claims

1. Method for the preparation of synthesis gas comprising the steps of
(a) providing a hydrocarbon feed stock;
(b) preparing a separate hydrogen containing stream and a separate oxygen containing stream by electrolysis of water and/or steam;
(c) tubular steam reforming at least a part of the hydrocarbon feed stock from step (a)to a tubular steam reformed gas;
(d)autothermal reforming in an autothermal reformer the tubular steam reformed gas with at least a part of the oxygen containing stream obtained by the electrolysis of water and/or steam in step (b) to an autothermal reformed gas stream comprising hydrogen, carbon monoxide and carbon dioxide;
(e) introducing at least part of the separate hydrogen containing stream from step (b) into the autothermal reformed gas stream from step (d); and
(f) withdrawing the synthesis gas, wherein the electrolysis is operated such that all the hydrogen produced by the electrolysis is added to the reformed gas downstream step (d) to provide a module M=(H₂-CO₂)/(CO+CO₂) in the synthesis gas withdrawn from step (f) of between 1.9 and 2.2, preferably between 2 and 2.1.

2. The method of claim 1, comprising the further step of separating air into a separate stream containing oxygen and into a separate stream containing nitrogen and introducing at least a part of the separate stream containing oxygen into the autothermal reformer.

3. The method of claim 1 or 2, wherein a part of the hydrocarbon feed stock from step (a) is bypassed the tubular steam reforming in step (c) and introduced to the autothermal reformer in step (d).

4. The method of any one of claims 1 to 3, wherein the hydrocarbon feed stock comprises natural gas, methane, LNG, naphtha or mixtures thereof either as such or pre-reformed and/or desulfurized.

5. The method of any one of claims 1 to 4, wherein the electrolysis of water and/or steam in step (b) is powered at least in part by renewable energy.

6. The method of any one of claims 2 to 5, wherein the separating of air is powered at least in part by renewable energy.

7. The method of any one of claims 1 to 6, comprising the further step of introducing substantially pure carbon dioxide upstream step (c), and/or upstream of step (d), and/or downstream step (d).

8. The method of claim any one of claims 1 to 7, wherein the module M=(H₂-CO₂)/(CO+CO₂) in the synthesis gas withdrawn in step (f) is in the range from 2 to 2.1.

9. The method of any one of claims 1 to 8, wherein the synthesis gas withdrawn in step (f) is in a further step converted to a methanol product.

## Patentansprüche

1. Verfahren zur Herstellung von Synthesegas, das die folgenden Schritte umfasst
(a) Bereitstellen eines Kohlenwasserstoff-Einsatzmaterials;
(b) Erzeugen eines separaten Wasserstoff enthaltenden Stroms und eines separaten Sauerstoff enthaltenden Stroms durch Elektrolyse von Wasser und/oder Dampf;
(c) Rohr-Dampfreformieren mindestens eines Teils des Kohlenwasserstoff-Einsatzmaterials aus Schritt (a) zu einem rohr-dampfreformierten Gas;
(d) autothermes Reformieren des rohr-dampfreformierten Gases mit mindestens einem Teil des Sauerstoff enthaltenden Stroms, erhalten durch die Elektrolyse von Wasser und/oder Dampf in Schritt (b) , in einem autothermen Reformer zu einem autotherm reformierten Gasstrom, der Wasserstoff, Kohlenmonoxid und Kohlendioxid umfasst;
(e) Einführen mindestens eines Teils des separaten Wasserstoff enthaltenden Stroms aus Schritt (b) in den autotherm reformierten Gasstrom aus Schritt (d); und
(f) Abziehen des Synthesegases, wobei die Elektrolyse so betrieben wird, dass der gesamte durch die Elektrolyse erzeugte Wasserstoff dem reformierten Gas stromabwärts von Schritt (d) zugegeben wird, um ein Modul M=(H₂-CO₂)/(CO+CO₂) in dem aus Schritt (f) abgezogenen Synthesegas zwischen 1,9 und 2,2, vorzugsweise zwischen 2 und 2,1, bereitzustellen.

2. Verfahren gemäß Anspruch 1, umfassend den weiteren Schritt des Trennens von Luft in einen separaten Strom, der Sauerstoff enthält, und in einen separaten Strom, der Stickstoff enthält, und des Einführens mindestens eines Teils des separaten Stroms, der Sauerstoff enthält, in den autothermen Reformer.

3. Verfahren gemäß Anspruch 1 oder 2, wobei ein Teil des Kohlenwasserstoff-Einsatzmaterials aus Schritt (a) an der Rohr-Dampfreformierung in Schritt (c) vorbeigeführt und in Schritt (d) in den autothermen Reformer eingeführt wird.

4. Verfahren gemäß einem der Ansprüche 1 bis 3, wobei das Kohlenwasserstoff-Einsatzmaterial Erdgas, Methan, LNG, Naphtha oder Mischungen davon entweder als solches oder vorreformiert und/oder entschwefelt umfasst.

5. Verfahren gemäß einem der Ansprüche 1 bis 4, wobei die Elektrolyse von Wasser und/oder Dampf in Schritt (b) zumindest teilweise durch erneuerbare Energie betrieben wird.

6. Verfahren gemäß einem der Ansprüche 2 bis 5, wobei das Trennen von Luft mindestens teilweise mit erneuerbarer Energie betrieben wird.

7. Verfahren gemäß einem der Ansprüche 1 bis 6, umfassend den weiteren Schritt des Einführens von im Wesentlichen reinem Kohlendioxid stromaufwärts von Schritt (c) und/oder stromaufwärts von Schritt (d) und/oder stromabwärts von Schritt (d).

8. Verfahren gemäß einem der Ansprüche 1 bis 7, wobei das Modul M=(H₂-CO₂)/(CO+CO₂) in dem in Schritt (f) abgezogenen Synthesegas im Bereich von 2 bis 2,1 liegt.

9. Verfahren gemäß einem der Ansprüche 1 bis 8, wobei das in Schritt (f) abgezogene Synthesegas in einem weiteren Schritt in ein Methanol-Produkt umgewandelt wird.

## Revendications

1. Procédé de préparation de gaz de synthèse comprenant les étapes:
(a) procurer une charge d'hydrocarbures;
(b) préparer un courant séparé contenant de l'hydrogène et un courant séparé contenant de l'oxygène, par électrolyse d'eau et/ou de vapeur;
(c) effectuer un vaporeformage en réacteur tubulaire d'au moins une partie de la charge d'hydrocarbures issue de l'étape (a) pour donner un gaz vaporeformé en réacteur tubulaire,
(d) effectuer un reformage autothermique dans un reformeur autothermique du gaz vaporeformé en réacteur tubulaire, avec au moins une partie du courant contenant de l'oxygène obtenu par électrolyse d'eau et/ou de vapeur à l'étape (b) pour donner un courant de gaz ayant subi un reformage autothermique comprenant de l'hydrogène, du monoxyde de carbone et du dioxyde de carbone;
(e) introduire au moins une partie du courant séparé contenant de l'hydrogène issu de l'étape (b) dans le courant de gaz ayant subi un reformage autothermique issu de l'étape (d); et
(f) extraire le gaz de synthèse, l'électrolyse étant réalisée de sorte que la totalité de l'hydrogène produit par l'électrolyse est ajoutée au gaz reformé, en aval de l'étape (d), pour obtenir un module M= (H₂-CO₂)/(CO+CO₂) dans le gaz de synthèse extrait de l'étape (f) qui est compris entre 1,9 et 2,2, de préférence entre 2 et 2,1.

2. Procédé selon la revendication 1, comprenant l'étape supplémentaire de séparer l'air en un courant séparé contenant de l'oxygène et en un courant séparé contenant de l'azote et à introduire au moins une partie du courant séparé contenant de l'oxygène dans le reformeur autothermique.

3. Procédé selon la revendication 1 ou 2, dans lequel une partie de charge d'hydrocarbures issue de l'étape (a) court-circuite le vaporeformage en réacteur tubulaire à l'étape (c) et est introduite dans le reformeur autothermique à l'étape (d).

4. Procédé selon l'une quelconque des revendications 1 à 3, dans lequel la charge d'hydrocarbures comprend du gaz naturel, du méthane, du GNL, du naphta ou des mélanges de ceux-ci soit tels quels, soit pré-reformés et/ou désulfurés.

5. Procédé selon l'une quelconque des revendications 1 à 4, dans lequel l'électrolyse d'eau et/ou de vapeur à l'étape (b) est alimentée au moins en partie par des énergies renouvelables.

6. Procédé selon l'une quelconque des revendications 2 à 5, dans lequel la séparation de l'air est alimentée au moins en partie par des énergies renouvelables.

7. Procédé selon l'une quelconque des revendications 1 à 6, comprenant l'étape supplémentaire d'introduire du dioxyde de carbone sensiblement pur en amont de l'étape (c), et/ou en amont de l'étape (d), et/ou en aval de l'étape (d).

8. Procédé selon l'une quelconque des revendications 1 à 7, dans lequel le module M= (H₂-CO₂)/(CO+CO₂) dans le gaz de synthèse extrait à l'étape (f) est compris entre 2 et 2,1.

9. Procédé selon l'une quelconque des revendications 1 à 8, dans lequel le gaz de synthèse extrait à l'étape (f) est dans une étape supplémentaire converti en produit méthanol.
